(19)

Europäisches Patentamt
European Patent Office
Office européen des brevets

(11) **EP 4 654 148 A1**

(12) **EUROPEAN PATENT APPLICATION**
published in accordance with Art. 153(4) EPC

(43) Date of publication:
**26.11.2025 Bulletin 2025/48**

(21) Application number: **24752916.7**

(22) Date of filing: **08.02.2024**

(51) International Patent Classification (IPC):
***G06T 17/00*** (2006.01)

(52) Cooperative Patent Classification (CPC):
**G06T 5/70; G06T 17/00**

(86) International application number:
**PCT/CN2024/076850**

(87) International publication number:
**WO 2024/165062 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **09.02.2023 CN 202310153062**

(71) Applicant: **Huawei Technologies Co., Ltd.
Shenzhen, Guangdong 518129 (CN)**

(72) Inventors:
• **ZHOU, Baojian
Shenzhen, Guangdong 518129 (CN)**

• **LUO, Jiajin
Shenzhen, Guangdong 518129 (CN)**
• **PENG, Xiaohui
Shenzhen, Guangdong 518129 (CN)**
• **ZHANG, Ping
Shenzhen, Guangdong 518129 (CN)**
• **YANG, Xun
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **POINT CLOUD DATA PROCESSING METHOD AND APPARATUS**

(57)    This application provides a point cloud data processing method and apparatus, and relates to the field of computer technologies. In the method, after first point cloud data including brightness and coordinates of N points is obtained, a target point with relatively high brightness in a neighborhood of each of M points in the N points may be retained based on brightness distribution of the neighborhood of each point, to obtain K target points, and second point cloud data is obtained based on brightness and coordinates of the K target points. Because the target point with relatively high brightness in the neighborhood of each point is retained, valid data in the point cloud data may be retained as much as possible when a data volume of the point cloud data is reduced, thereby improving effect of filtering the point cloud data.

FIG. 5

**Description**

CROSS-REFERENCE TO RELATED APPLICATIONS

This application claims priority to Chinese Patent Application No. 202310153062.5, filed with the China National Intellectual Property Administration on February 9, 2023 and entitled "POINT CLOUD DATA PROCESSING METHOD AND APPARATUS", which is incorporated herein by reference in its entirety.

TECHNICAL FIELD

This application relates to the field of computer technologies, and in particular, to a point cloud data processing method and apparatus.

BACKGROUND

Point cloud (point cloud, PC) data may be used in a scenario in which an object needs to be reconstructed, for example, a self-driving scenario and a high high-definition map drawing scenario. The object is, for example, a substance. A collection device may obtain data such as coordinates and brightness of each point on a surface of the substance, to obtain point cloud data of the substance. A larger quantity of points leads to a larger data volume of point cloud data corresponding to these points. For example, for a substance with a length of 100 m, a width of 50 m, and a height of 50 m, if resolution along a length direction, resolution along a width direction, and resolution along a height direction are all 0.5 m, a quantity of points included in point cloud data corresponding to the substance is 2 million. Naturally, a data volume of the point cloud data corresponding to the substance is also relatively large.

Because the data volume of the point cloud data is relatively large, resource overheads for transmitting or processing the point cloud data are increased. However, there is currently no solution to reduce the data volume of the point cloud data.

SUMMARY

This application provides a point cloud data processing method and apparatus, to reduce a data volume of point cloud data.

According to a first aspect, an embodiment of this application provides a point cloud data processing method, and the method may be performed by a first data processing apparatus. The first data processing apparatus is, for example, an apparatus having a function of collecting point cloud data, for example, a lidar system or an access network element. The access network element is, for example, a base station. The method includes: obtaining first point cloud data, where the first point cloud data includes brightness and coordinates of N points, and N is an integer greater than 1; determining a neighborhood of each of M points, where the neighborhood of each point includes at least one of the N points, the at least one point is distributed by using each point as a center, the M points belong to the N points, and M is a positive integer less than or equal to N; determining, from the neighborhood of each of the M points, target points corresponding to S largest brightness values, to obtain a total of K target points, where K is a positive integer less than N, and S is a positive integer; and determining second point cloud data based on brightness and coordinates of the K target points.

In this embodiment of this application, the first data processing apparatus may determine the K target points from the N points, and determine the second point cloud data based on the K target points. This is equivalent to screening out some of the N points, thereby reducing a data volume of the point cloud data, and reducing resource overheads for transmitting or processing the point cloud data. In addition, if brightness of a point is higher, it indicates that a characteristic of the point is more obvious than a characteristic of another point. Therefore, the first data processing apparatus may determine, from the neighborhood of each of the M points, the target points corresponding to the S largest brightness values, that is, retain a target point with relatively high brightness in the neighborhood of each point. This is equivalent to retaining valid data in the point cloud data, thereby improving accuracy of performing a processing process such as object reconstruction based on the second point cloud data, and improving effect of performing processing such as object reconstruction based on the second point cloud data.

In a possible implementation, determining the neighborhood of each of the M points includes: obtaining, through division from a target area by using each point as a center, an area whose radius is a target value, and determining the area obtained through division as the neighborhood of each point, where the target area is an area including the N points.

In the foregoing implementation, a neighborhood division manner is provided. In addition, the neighborhood of each of the M points is obtained through division by using the target value as a reference. In other words, radiuses of neighborhoods of any two of the M points may be the same. In this way, radiuses of neighborhoods of the M points do not need to be separately determined, thereby simplifying a process of determining the neighborhoods of the M points.

In a possible implementation, the method further includes: obtaining R candidate values of a neighborhood radius of each point, where R is an integer greater than 1; obtaining R groups of candidate neighborhoods, where each group of candidate neighborhoods in the R groups of candidate neighborhoods include M candidate neighborhoods determined based on one candidate value in the R candidate values and the M points, and R is an integer greater than 1; obtaining R groups of candidate points, where each group of candidate points in the R groups of candidate points include candidate points that are determined from each candidate neighborhood in each group of candidate neighborhoods and that are corresponding to S largest brightness values; and determining a parameter of each group of candidate points in the R groups of candidate points, where the target value is a candidate value corresponding to a group of candidate points with a largest value of the parameter, and the parameter of each group of candidate points indicates a brightness difference between candidate points included in each group of candidate points.

In the foregoing implementation, the first data processing apparatus may determine a candidate value corresponding to a largest parameter as the target value. In other words, when candidate radiuses of the M points are the target value, a brightness difference in the neighborhood of each of the M points is relatively large. Because the brightness difference in the neighborhood of each point is relatively large, it indicates that the neighborhood of each point includes more abundant points (for example, a point with low brightness and a point with high brightness), and indicates that the neighborhood of each point can more comprehensively reflect a characteristic of a surrounding point of each point. Therefore, determining a point with highest brightness based on the neighborhood of each of the M points helps retain a target point with a more obvious characteristic in the N points, so that the second point cloud data can retain valid data in the first point cloud data, thereby helping improve effect of performing a processing process such as object reconstruction based on the second point cloud data.

In a possible implementation, determining the parameter of each group of candidate points in the R groups of candidate points includes: determining a difference between a sum of brightness of the candidate points included in each group of candidate points and an average brightness value of the candidate points included in each group of candidate points, and determining the parameter based on the difference; or determining the parameter based on a brightness distribution probability of the candidate points included in each group of candidate points.

In the foregoing implementation, two manners of determining a parameter corresponding to a candidate value are provided. In both the two manners, the parameter may be determined directly based on the brightness included in the first point cloud data, and the parameter does not need to be determined by using other additional information, thereby reducing difficulty in determining the parameter.

In a possible implementation, obtaining the R candidate values of the neighborhood radius of each point includes: receiving first information from a second data processing apparatus, where the first information indicates the R candidate values.

In the foregoing implementation, the first data processing apparatus may directly obtain the R candidate values from the second data processing apparatus. In one aspect, the first data processing apparatus does not need to determine the R candidate values, thereby reducing processing load of the first data processing apparatus. In another aspect, the second data processing apparatus can determine the R candidate values based on a requirement for processing the point cloud data, so that the R candidate values can better meet the requirement for processing the point cloud data.

In a possible implementation, the method further includes: sending second information to the second data processing apparatus, where the second information indicates a density for sampling the first point cloud data, and the density is used to determine a candidate value of the neighborhood radius of each point.

In the foregoing implementation, the second data processing apparatus may determine the neighborhood radius of the point based on, for example, the density. In this case, the radius may be measured by using a quantity of points, so that the first data processing apparatus may intuitively and quickly determine the neighborhood of the point based on the radius measured by using the quantity of points.

In a possible implementation, the neighborhood of each of the M points includes neighborhoods that are of each point and that are along a plurality of coordinate axis directions; and determining, from the neighborhood of each of the M points, the target points corresponding to the S largest brightness values includes: determining, from a neighborhood that is of each point and that is along at least one of the plurality of coordinate axis directions, target points corresponding to S largest brightness values.

In the foregoing implementation, a difference between characteristics that are of an object and that are along different coordinate axis directions may be relatively large. Correspondingly, a difference between brightness that is of the point cloud data collected based on the object and that is along different coordinate axis directions may also be relatively large. Therefore, the first data processing apparatus separately screens points in neighborhoods that are of a point and that are along different coordinate axis directions, thereby helping more comprehensively and accurately retain a target point with a more obvious characteristic in the neighborhood of the point.

In a possible implementation, determining the brightness and the coordinates of the K target points from the first point cloud data, to obtain the second point cloud data includes: determining H target points from the K target points based on at least one brightness threshold, where H is a positive integer less than K; and determining brightness and coordinates of the H target points from the first point cloud data, to obtain the second point cloud data.

In the foregoing implementation, the first data processing apparatus may further screen the K target points based on the at least one brightness threshold, so that the data volume of the point cloud data may be further reduced. In addition, when the first data processing apparatus screens the points based on a plurality of brightness thresholds, a case in which a point with valid information is screened out by using a global single threshold may be avoided, and valid data in the point cloud data may be retained to a maximum extent.

In a possible implementation, the method further includes: sending third information to the second data processing apparatus, where the third information indicates the brightness of the N points, and the brightness of the N points is used to determine the at least one brightness threshold; and receiving fourth information from the second data processing apparatus, where the fourth information indicates the at least one brightness threshold.

In the foregoing implementation, the second data processing apparatus may determine the at least one brightness threshold, thereby relatively reducing processing load of the first data processing apparatus. In addition, the second data processing apparatus may further determine the at least one brightness threshold based on a requirement for processing the point cloud data (for example, a quantity of object types that are expected to be identified based on the first point cloud data), so that the determined at least one brightness threshold better meets the requirement.

In a possible implementation, the method further includes: determining the at least one brightness threshold based on the brightness of the N points; or determining the at least one brightness threshold based on the brightness of the N points and a first quantity, where the first quantity is a quantity of object types that are expected to be identified based on the first point cloud data, and a quantity of the at least one brightness threshold is the first quantity.

In the foregoing implementation, a plurality of manners of determining the at least one brightness threshold by the first data processing apparatus are provided. For example, the first data processing apparatus may directly determine the at least one brightness threshold based on the brightness of the N points, thereby quickly and simply determining the at least one brightness threshold. Alternatively, the first data processing apparatus may determine, based on the brightness of the N points and the first quantity, a brightness threshold that better meets a requirement for processing the point cloud data.

According to a second aspect, an embodiment of this application provides a point cloud data processing method, and the method may be performed by a second data processing apparatus. The second data processing apparatus may be a device having a processing capability, and the second data processing apparatus may be, for example, a core network element. The method includes: The second data processing apparatus sends first information to a first data processing apparatus, where the first information indicates R candidate values of neighborhood radiuses of M points, the M points belong to N points corresponding to first point cloud data, the first point cloud data includes brightness and coordinates of the N points, N is an integer greater than 1, and M is a positive integer less than or equal to N; and receives second point cloud data from the first data processing apparatus, where the second point cloud data is determined based on intensity and coordinates of K target points, the K target points include target points that are determined from a neighborhood of each of the M points and that are corresponding to S largest brightness values, a neighborhood radius of each of the M points is a target value, and the target value is one candidate value in the R candidate values.

In a possible implementation, before sending the first information to the first data processing apparatus, the method further includes: receiving second information from the first data processing apparatus, where the second information indicates a density for sampling the first point cloud data, and the density is used to determine a candidate value of the neighborhood radius of each point.

In a possible implementation, the method further includes: receiving third information from the first data processing apparatus, where the third information indicates the brightness of the N points; determining at least one brightness threshold based on the brightness of the N points or based on the brightness of the N points and a first quantity, where the first quantity is a quantity of object types that are expected to be identified based on the first point cloud data, and a quantity of the at least one brightness threshold is the first quantity; and sending fourth information to the first data processing apparatus, where the fourth information indicates the at least one threshold, the at least one brightness threshold is used to determine H target points from the K target points, H is a positive integer less than K, and the second point cloud data includes brightness and coordinates of the H target points.

According to a third aspect, an embodiment of this application provides a data processing apparatus. The data processing apparatus may be the first data processing apparatus in the first aspect, or may be a software or hardware module (for example, a chip) configured in the first data processing apparatus. The data processing apparatus includes a corresponding means (means) or module for executing the first aspect or any possible implementation. For example, the data processing apparatus includes a data obtaining module (sometimes referred to as a data obtaining unit), a neighborhood determining module (sometimes referred to as a neighborhood determining unit), and a point filtering module (sometimes referred to as a point filtering unit).

For example, the data obtaining module is configured to obtain first point cloud data, where the first point cloud data includes brightness and coordinates of N points, and N is an integer greater than 1. The neighborhood determining module is configured to determine a neighborhood of each of M points, where the neighborhood of each point includes at least one of the N points, the at least one point is distributed by using each point as a center, the M points belong to the N points, and M is a positive integer less than or equal to N. The point filtering module is configured to: determine, from the neighborhood of each of the M points, target points corresponding to S largest brightness values, to obtain a total of K target points, where K is a positive integer less than N, and S is a positive integer; and determine second point cloud data based on brightness and coordinates of the K target points.

According to a fourth aspect, an embodiment of this application provides a data processing apparatus. The data processing apparatus may be the second data processing apparatus in the second aspect, or may be a software or hardware module (for example, a chip) configured in the second data processing apparatus. The data processing apparatus includes a corresponding means (means) or module for executing the second aspect or any possible implementation. For example, the data processing apparatus includes a transceiver module (sometimes referred to as a transceiver unit) and a processing module (sometimes referred to as a processing unit).

For example, the transceiver module is configured to: under control of the processing module, send first information to a first data processing apparatus, where the first information indicates R candidate values of neighborhood radiuses of M points, the M points belong to N points corresponding to first point cloud data, the first point cloud data includes brightness and coordinates of the N points, N is an integer greater than 1, and M is a positive integer less than or equal to N; and receive second point cloud data from the first data processing apparatus, where the second point cloud data is determined based on intensity and coordinates of K target points, the K target points include target points that are determined from a neighborhood of each of the M points and that are corresponding to S largest brightness values, a neighborhood radius of each of the M points is a target value, and the target value is one candidate value in the R candidate values.

According to a fifth aspect, an embodiment of this application provides a data processing system. The data processing system includes the data processing apparatus in the third aspect and the data processing apparatus in the fourth aspect.

According to a sixth aspect, an embodiment of this application provides a computing device. The computing device includes a processor and a memory. The memory is configured to store one or more computer programs, the one or more computer programs include computer instructions, and when the processor executes the computer instructions, the method according to any one of the first aspect or the second aspect is performed.

Optionally, the communication apparatus further includes other components such as an antenna, an input/output module, or an interface. The components may be hardware, software, or a combination of software and hardware.

According to a seventh aspect, an embodiment of this application provides a computing device cluster, including at least one computing device. Each computing device includes a processor and a memory. The processor of the at least one computing device is configured to execute instructions stored in the memory of the at least one computing device, so that the computing device cluster performs the method according to any one of the first aspect or the second aspect.

According to an eighth aspect, an embodiment of this application provides a chip system. The chip system includes a processor and an interface. The processor is configured to invoke instructions from the interface and run the instructions. When the processor executes the instructions, the method according to any one of the first aspect or the second aspect is implemented.

According to a ninth aspect, an embodiment of this application provides a computer-readable storage medium. The computer-readable storage medium is configured to store a computer program or instructions. When the computer program or instructions are run (for example, run by a processor), the method according to any one of the first aspect or the second aspect is implemented.

According to a tenth aspect, an embodiment of this application provides a computer program product including instructions. When the instructions are run on a computer, the method according to any one of the first aspect or the second aspect is implemented.

For beneficial effects of the second aspect to the tenth aspect, refer to the beneficial effects described in the first aspect. The beneficial effects are not described herein again.

BRIEF DESCRIPTION OF DRAWINGS

FIG. 1 is a diagram of point cloud data corresponding to a sphere;
FIG. 2 is a diagram of a scenario to which an embodiment of this application is applicable;
FIG. 3 is a diagram of a process of filtering point cloud data according to an embodiment of this application;
FIG. 4 is a diagram of a scenario according to an embodiment of this application;
FIG. 5 is a diagram of a data processing method according to an embodiment of this application;
FIG. 6 is a diagram of a neighborhood according to an embodiment of this application;
FIG. 7 is a diagram of a process of processing point cloud data according to an embodiment of this application;

FIG. 8 is a diagram of a method for obtaining at least one brightness and policy according to an embodiment of this application;

FIG. 9 is a diagram of a histogram according to an embodiment of this application;

FIG. 10 is a diagram of a structure of a data processing apparatus according to an embodiment of this application;

FIG. 11 is a diagram of a structure of another data processing apparatus according to an embodiment of this application;

FIG. 12 is a diagram of a structure of a computing device according to an embodiment of this application; and

FIG. 13 is a diagram of a structure of a computing device cluster according to an embodiment of this application.

## DESCRIPTION OF EMBODIMENTS

To make objectives, technical solution, and advantages of embodiments of this application clearer, the following further describes embodiments of this application in detail with reference to accompanying drawings.

The following describes some terms in embodiments of this application, to facilitate understanding of a person skilled in the art.

1. Point cloud data: is a collection of data of a plurality of points on a surface of one or more objects. The object is, for example, one or more of a substance, an animal, and a person, and data of a point includes, for example, coordinates and/or a brightness parameter of the point. For example, the point cloud data may include coordinates and/or brightness parameters of the plurality of points on the surface of the one or more objects. Coordinates of a point may be coordinates of the point in a Cartesian coordinate system or a world coordinate system. For example, the point cloud data is three-dimensional (three dimensions, 3D) point cloud data. Coordinates of a point included in the three-dimensional point cloud data may be three-dimensional coordinates, for example, including information about an X-axis, a Y-axis, and a Z-axis. Brightness of a point is brightness that is presented by the point and that is determined through detection. For example, in point cloud data collected by using a lidar system, brightness of a point may be understood as intensity that is of a radar signal reflected by the point and that is determined through detection. For another example, in point cloud data collected by using a synthetic aperture radar (synthetic aperture radar, SAR) technology, brightness of a point may be a scattering coefficient that is of the point and that is determined by analyzing an echo signal of the point. Optionally, the point cloud data may further include color parameters and the like of the plurality of points. The color parameters are, for example, color data in a red, green, blue (red, green, blue, RGB) format.

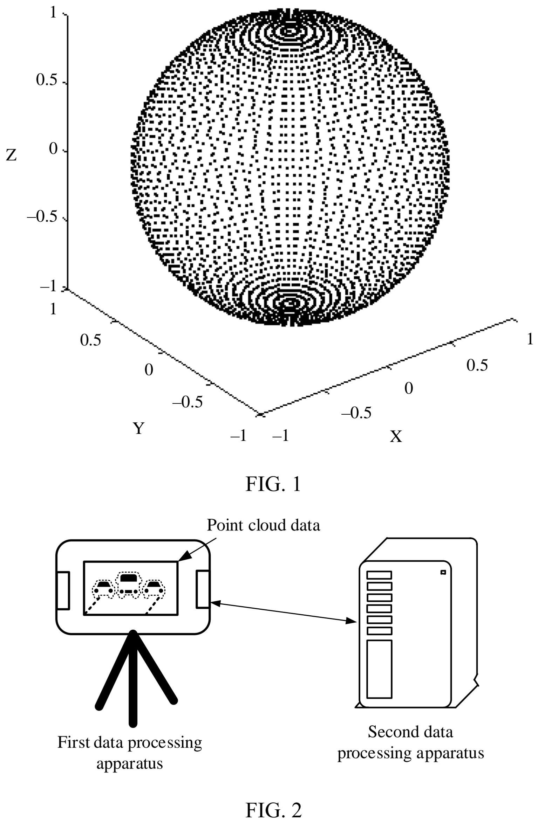

For example, FIG. 1 is a diagram of point cloud data corresponding to a sphere. As shown in FIG. 1, the point cloud data includes coordinates and brightness parameters of a plurality of points on a surface of the sphere. The brightness parameter may also be briefly referred to as brightness.

2. Density (density) for sampling point cloud data: may also be referred to as a sampling density, reflects spatial distribution and a denseness degree of points, and may also reflect a spatial distribution characteristic of an object corresponding to the point cloud data. A higher density indicates higher resolution of the point cloud data, and indicates more obtained data of the object. A lower density indicates lower resolution of the point cloud data, and indicates less obtained data of the object. The density may include a density along one or more coordinate axis directions, and densities that are of the point cloud data and that are along a plurality of coordinate axis directions may be the same or different. A plurality of coordinate axes may include an X-axis, a Y-axis, and a Z-axis.

For example, the density of the point cloud data includes a density of 0.5 meters along an X-axis direction, a density of 0.5 meters along a Y-axis direction, and a density of 1 meter along a Z-axis direction. In this assumption, in a plurality of points corresponding to the point cloud data, a distance that is between two adjacent points and that is along the X-axis direction is 0.5 m, a distance that is between two adjacent points and that is along the Y-axis direction is 0.5 m, and a distance that is between two adjacent points and that is along the Z-axis direction is 1 m. It may also be understood that when collecting the point cloud data, a device collects data of two points per meter along the X-axis direction, collects data of two points per meter along the Y-axis direction, and collects data of one point per meter along the Z-axis direction.

3. Terminal device: is a device having wireless receiving and sending functions, and may be a fixed device, a mobile device, a handheld device, a wearable device, a vehicle-mounted device, a vehicle, or a wireless apparatus (for example, a communication module or a chip system) built into the foregoing device. The vehicle is, for example, an automated guided vehicle (automated guided vehicle, AGV). The terminal device is configured to connect people, things, machines, and the like, and may be widely used in various scenarios. For example, the terminal device includes but is not limited to terminal devices in scenarios such as cellular communication, device-to-device (device-to-device, D2D) communication, vehicle-to-everything (vehicle-to-everything, V2X), machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self-driving (self-driving), telemedicine (remote medical), a smart grid (smart grid), smart furniture, smart office, a smart wearable, smart transportation, a smart city (smart city), an uncrewed aerial vehicle, and a robot. The terminal device may be sometimes referred to as user equipment (user equipment, UE), a terminal, an access station, a UE station, a remote station, a wireless communication device, a user apparatus, or the like.

4. Access network element: is a device having wireless receiving and sending functions, and is configured to communicate with the terminal device. The access network element includes but is not limited to a base station (BTS, NodeB, eNodeB/eNB, or gNodeB/gNB) in the foregoing communication system, a transmission reception point (transmission reception point, TRP), a base station subsequently evolved in 3GPP, an access node in a wireless fidelity (wireless fidelity, Wi-Fi) system, a wireless relay node, a wireless backhaul node, a satellite, an uncrewed aerial vehicle, or the like. The base station may be a macro base station, a micro base station, a picocell base station, a small cell, a relay station, or the like. A plurality of base stations may support networks of a same access technology mentioned above, or may support networks of different access technologies mentioned above. The base station may include one or more co-site or non-co-site transmission reception points. Alternatively, the network device may be a radio controller, a central unit (central unit, CU) that may also be referred to as an aggregation unit, and/or a distributed unit (distributed unit, DU) in a cloud radio access network (cloud radio access network, C(R)AN) scenario. Alternatively, the network device may be a server, a wearable device, a vehicle-mounted device, or the like. For example, a network device in the vehicle-to-everything (vehicle-to-everything, V2X) technology may be a road side unit (road side unit, RSU). The following uses an example in which the access network device is a base station for description. A plurality of network devices in the communication system may be base stations of a same type, or may be base stations of different types. The base station may communicate with the terminal device, or may communicate with the terminal device via a relay station. The terminal device may communicate with the plurality of base stations in different access technologies.

A core network element is configured to implement at least one of functions such as mobility management, data processing, session management, and policy and charging. Names of devices that implement core network functions in systems using different access technologies may be different. This is not limited in embodiments of this application. A 5G system is used as an example. The core network element includes an access and mobility management function (access and mobility management function, AMF), a session management function (session management function, SMF), a user plane function (user plane function, UPF), or the like.

5. Network element: may be a single device or an integrated result of a plurality of devices. The network element shown in embodiments of this application may alternatively be a logical concept, for example, a software module, or a network function corresponding to a service provided by each network element. The network function may be understood as a virtualization function in virtualization implementation, or may be understood as a network function that provides a service in a service-oriented network. For example, the network element is an SMF for managing a session in a 5th generation (5th generation, 5G) communication system. This is not specifically limited in embodiments of this application.

In embodiments of this application, unless otherwise specified, a quantity of a noun represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof means any combination of these items, including any combination of singular items (pieces) or plural items (pieces). For example, at least one of a, b, or c indicates a, b, c, a and b, a and c, b and c, or a, b, and c, where a, b, and c may be singular or plural.

FIG. 2 is a diagram of a scenario to which an embodiment of this application is applicable. Alternatively, FIG. 2 may be considered as a diagram of a structure of a data processing system. As shown in FIG. 2, the scenario includes a first data processing apparatus and a second data processing apparatus that may communicate with each other by using a communication network. The communication network is, for example, a wireless communication network or a wired communication network.

For example, the first data processing apparatus is configured to collect point cloud data corresponding to an object. In FIG. 2, an example in which the object includes a road and a vehicle is used for illustration. The first data processing apparatus may process the point cloud data, and send processed point cloud data to the second data processing apparatus. A process in which the first data processing apparatus processes the point cloud data is described below. The second data processing apparatus may perform object reconstruction and the like based on the processed point cloud data.

The second data processing apparatus may be a device having a processing capability, for example, a computing device. The computing device is, for example, a terminal device or a server. An implementation of the first data processing apparatus may vary depending on a manner in which the first data apparatus collects the point cloud data. The following separately describes implementations.

Manner 1: The first data processing apparatus may obtain the point cloud data in a sampling manner.

For example, the first data processing apparatus may prestore model data corresponding to the object, and sample the model data, to obtain the point cloud data corresponding to the object. In the manner 1, the first data processing apparatus may be an apparatus having a data collection function. The apparatus having the data collection function may also be referred to as a collection apparatus.

Manner 2: The first data processing apparatus may obtain the point cloud data in a scanning manner.

For example, the first data processing apparatus may transmit a signal (for example, an optical signal or an electrical signal) to the object, and obtain the point cloud data based on a signal reflected by a surface of the object. In the manner 2, the first data processing apparatus may be an apparatus having signal receiving and sending functions, for example, a lidar system.

Manner 3: The first data processing apparatus may obtain the point cloud data in an imaging manner.

For example, the first data apparatus may collect, by using an imaging principle, the point cloud data corresponding to the object. In the manner 3, the first data processing apparatus may collect the point cloud data based on, for example, an SAR technology. For example, the first data processing apparatus may be an access network element. The access network element exchanges a signal with a terminal device, to collect the point cloud data corresponding to the object between the terminal device and the access network element.

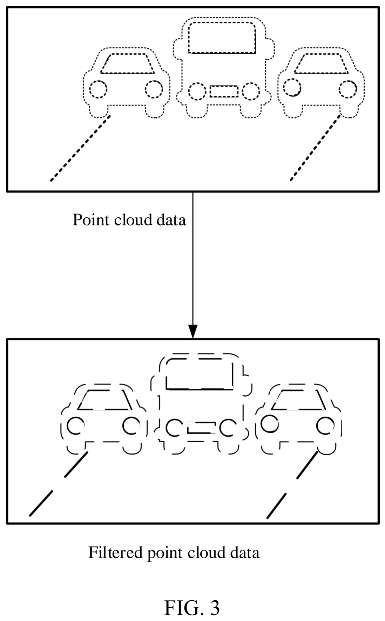

FIG. 3 is a diagram of filtering point cloud data according to an embodiment of this application. For example, a first data processing apparatus collects point cloud data shown in FIG. 3, processes the point cloud data to obtain filtered point cloud data shown in FIG. 3, and sends the filtered point cloud data to a second data processing apparatus. It may be learned from FIG. 3 that, after the first data processing apparatus filters the point cloud data, a data volume of the point cloud data is reduced. A process in which the first data processing apparatus processes the point cloud data is described below.

To reduce a data volume of point cloud data, an embodiment of this application provides a data processing method. In the method, a first data processing apparatus may obtain data (for example, brightness and coordinates) of a plurality of points (for example, N points, where N is an integer greater than 1) included in point cloud data, determine a target point with highest brightness in a neighborhood of each of M points in the N points based on brightness of at least one point included in the neighborhood of each point, and filter out a point other than the target point from the N points. By analogy, the first data processing apparatus may obtain K target points, and obtain second point cloud data based on data of the K target points. In this embodiment of this application, some of the N points are screened out based on the brightness of the point in the neighborhood of each point. In this way, when the point cloud data is reduced, a point with relatively high local brightness can be further retained, that is, a point with valid data is retained, thereby helping improve accuracy of reconstructing an object based on the second point cloud data.

The method provided in this embodiment of this application may be applied to various scenarios relating to point cloud data generation, point cloud data transmission, or point cloud data processing. The point cloud data in this embodiment of this application may be point cloud data collected based on an SAR technology. Because a data volume of the point cloud data collected based on the SAR technology is very large, the point cloud data collected based on the SAR technology may be filtered by using the method provided in this embodiment of this application, so that valid data in the point cloud data is retained as much as possible when the data volume of the point cloud data is reduced.

In a possible implementation, the first data processing apparatus is, for example, an access network element, and a second data processing apparatus is, for example, a core network element or an access network element. The second data processing apparatus may be specifically, for example, a baseband unit (baseband unit, BBU) in an access network element.

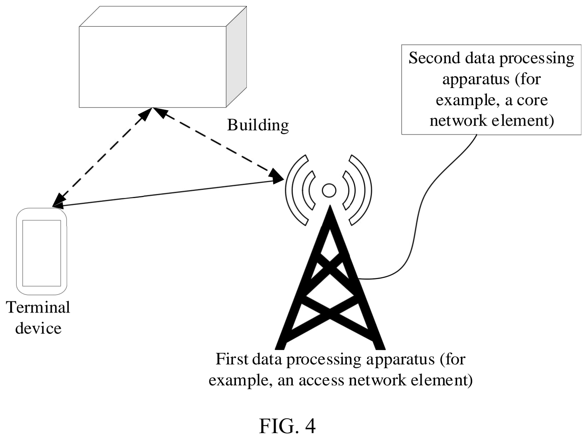

FIG. 4 is a diagram of a scenario according to an embodiment of this application. Alternatively, FIG. 4 may also be considered as a diagram of a structure of a data processing system, and FIG. 4 may also be considered as a diagram of a scenario in which point cloud data is collected based on an SAR technology. As shown in FIG. 4, the scenario includes a terminal device, a first data processing apparatus, and a second data processing apparatus. In FIG. 4, an example in which the first data processing apparatus is, for example, an access network element, and the second data processing apparatus is, for example, a core network element is used for description.

The access network element performs signal sending, receiving, and processing with the terminal device. The access network element and the terminal device cooperate to perform imaging on an object and collect point cloud data of the object. In FIG. 4, an example in which the object includes a building is used. The access network element may send the collected point cloud data to the core network element, so that the core network element processes the point cloud data.

In the scenario shown in FIG. 4, existing devices such as the terminal device, the access network element, and the core network element may be reused to collect and process the point cloud data. In this way, there is no need to rely on a new device, thereby helping reduce device costs of implementing the data processing method provided in embodiments of this application.

With reference to the accompanying drawings, the following describes the method provided in embodiments of this application.

In the accompanying drawings corresponding to embodiments of this application, all steps represented by using dashed lines are optional steps. In addition, in a process of describing embodiments of this application, a first data processing apparatus in embodiments of this application is, for example, the first data processing apparatus in FIG. 2 or FIG. 4, and a second data processing apparatus is, for example, the second data processing apparatus in FIG. 2 or FIG. 4.

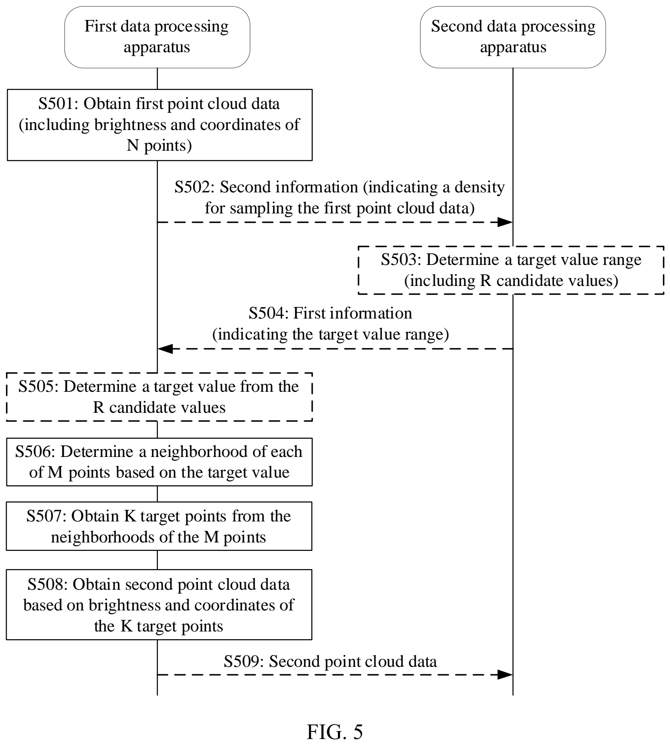

With reference to a diagram of a data processing method shown in FIG. 5, the following describes the method provided in embodiments of this application.

S501: A first data processing apparatus obtains first point cloud data.

For example, the first data processing apparatus may collect the first point cloud data, or the first data processing apparatus may obtain the first point cloud data from another device (a device other than the first data processing apparatus).

The first point cloud data includes data of N points. Data of each of the N points may include coordinates of each point, and the coordinates of each point may include a value that is of each point and that is along at least one of a plurality of coordinate axis directions. N is an integer greater than 1.

Optionally, the first point cloud data may further include color data of the N points. For content of the color data, refer to the foregoing description.

For example, Table 1 is an example of the first point cloud data.

Table 1

| Coordinates along an X-axis direction | Coordinates along a Y-axis direction | Coordinates along a Z-axis direction | Brightness |
|---|---|---|---|
| 0.78 | -45 | -2.4 | 120 |
| 4.7 | -38 | -4.34 | 10 |
| 15.4 | -46.183 | -9.15 | 130 |

As shown in Table 1, coordinates of a first point in the first point cloud data on an X-axis, a Y-axis, and a Z-axis are respectively 0.78, -45, and -2.4, and brightness of the first point is 120; coordinates of a second point in the first point cloud data on the X-axis, the Y-axis, and the Z-axis are respectively 4.7, -38, and -4.34, and brightness of the second point is 10; and coordinates of a third point in the first point cloud data on the X-axis, the Y-axis, and the Z-axis are respectively 15.4, -46.183, and -9.15, and brightness of the third point is 130. A unit of coordinate values of the first point cloud data on the X-axis, the Y-axis, and the Z-axis may be meters (m).

S502: The first data processing apparatus sends second information to a second data processing apparatus. Correspondingly, the second data processing apparatus receives the second information from the first data processing apparatus.

For example, the second information indicates a density for sampling the first point cloud data. For a meaning of the density, refer to the foregoing content.

S503: The second data processing apparatus determines a target value range.

The target value range is value ranges of neighborhood radiuses that are of each of M points and that are along the plurality of coordinate axis directions. Optionally, the radius may be measured in a plurality of manners. For example, the radius may be measured (or represented) directly by using a length, for example, a length corresponding to the radius is 3 m; or the radius is measured (or represented) by using a quantity of points corresponding to a length of the radius, for example, a value of the radius is two points.

The target value range includes R candidate values. The R candidate values may be understood as candidate values of a neighborhood radius of a point, for example, candidate values of a neighborhood radius of each of the M points. The M points may be some or all of the N points.

If a neighborhood of each of the M points includes a neighborhood that is of each point and that is along at least one of the plurality of coordinate axis directions, correspondingly, the target value range may include a value range of a neighborhood radius that is of each of the M points and that is along the at least one coordinate axis direction. When the target value range includes the value ranges of the neighborhood radiuses that are of each of the M points and that are along the plurality of coordinate axis directions, the value ranges of the neighborhood radiuses that are of each of the M points and that are along the plurality of coordinate axis directions may be the same, or value ranges of neighborhood radiuses that are of each of the M points and that are along at least two of the plurality of coordinate axis directions are different.

For example, the target value range includes a value range [3 m, 5 m] of a neighborhood radius that is of each of the M points and that is along the X-axis direction, a value range [3 m, 4 m] of a neighborhood radius that is of each of the M points and that is along the Y-axis direction, and a value range [3 m, 6 m] of a neighborhood radius that is of each of the M points and that is along the Z-axis direction.

When the neighborhood of each of the M points may include a neighborhood that is of each point and that is along at least one of the plurality of coordinate axis directions, each of the R candidate values includes a candidate value of a neighborhood radius that is of each of the M points and that is along the at least one coordinate axis direction.

The foregoing describes a meaning of the target value range, and the following describes a manner in which the second data processing apparatus determines the target value range.

In a first manner of determining the target value range, the second data processing apparatus may determine the target value range based on a target object type. The target object type is an object type that is expected to be identified based on the first point cloud data.

For example, the second data processing apparatus may prestore a first correspondence, and the first correspondence includes a plurality of types of objects and a value range corresponding to each of the plurality of types of objects. The second data processing apparatus determines, from the first correspondence based on the target object type, the target value range corresponding to the target object type.

For example, Table 2 is an example of the first correspondence.

Table 2

| Object type | Value range |
|---|---|
| House | [3 m, 10 m] |
| Bridge | [5 m, 10 m] |

As shown in Table 2, if the second data processing apparatus expects to identify a house (that is, the target object type is a house), the second data processing apparatus may determine that the target value range is a value range corresponding to the house, that is, [3 m, 10 m]. In this case, it may be understood that a value range of a neighborhood radius that is of each of the M points and that is along each coordinate axis direction is [3 m, 10 m]. If the second data processing apparatus expects to identify a bridge (that is, the target object is a bridge), the second data processing apparatus may determine that the target value range is a value range corresponding to the bridge, that is, [5 m, 10 m]. In this case, it may be understood that a value range of a neighborhood radius that is of each of the M points and that is along each coordinate axis direction is [5 m, 10 m].

In a second manner of determining the target value range, when a radius is represented by using a quantity of points corresponding to a length of the radius, the second data processing apparatus determines the target value range based on the target object type, the first correspondence, and the density for sampling the first point cloud data. For meanings of the target object type, the first correspondence, and the density for sampling the first point cloud data, refer to the foregoing description.

For example, the second data processing apparatus determines, in the manner 1, a value range corresponding to the target object type, converts the value range based on the density, and determines a converted value range as the target value range.

For example, the second data processing apparatus determines, based on the first correspondence, that the value range corresponding to the target object type is [5 m, 10 m], and the density is 0.5 m. In this case, the second data processing apparatus may determine that the target value range is [5 m/0.5 m, 10 m/0.5 m], that is, the target value range is [10, 20].

It should be understood that, if the second data processing apparatus determines the target value range in the first manner of determining the target value range, or the second data processing apparatus does not need to determine the target value range, step S502 may not be performed, that is, S502 is an optional step, and is shown by using a dashed line in FIG. 5.

S504: The second data processing apparatus sends first information to the first data processing apparatus. Correspondingly, the first data processing apparatus receives the first information from the second data processing apparatus.

For example, the first information may indicate the target value range. In this manner, after obtaining the target value range based on the first information, the first data processing apparatus may determine the R candidate values from the target value range.

For example, the first data processing apparatus may randomly select R candidate values from the target value range. Alternatively, the first data processing apparatus may determine candidate values from the target value range by using a preset step as an interval, to obtain the R candidate values. It may be understood that a difference between two adjacent candidate values in the R candidate values is the preset step. For example, the preset step is 0.5 m, and the target value range is [3 m, 5 m]. The second data processing apparatus may determine the R candidate values including 3 m, 3.5 m, 4 m, 4.5 m, and 5 m.

Alternatively, the first information may directly indicate the R candidate values included in the target value range. For example, the second data processing apparatus may determine R candidate values from the target value range, and indicate the R candidate values to the first data processing apparatus by using the first information. In this way, after receiving the first information, the first data processing apparatus obtains the R candidate values. For a manner in which the second data processing apparatus determines the R candidate values, refer to the content in which the first data processing apparatus determines the R candidate values. Details are not described herein again.

S503 and S504 are described by using an example in which the first data processing apparatus obtains the R candidate values from the second data processing apparatus. Actually, the first data processing apparatus may alternatively determine the R candidate values. In this case, steps S503 and S504 may not need to be performed, that is, S503 and S504 are optional steps, and are shown by using dashed lines in FIG. 5.

S505: The first data processing apparatus determines a target value from the R candidate values.

The target value is one of the R candidate values, and is equivalent to a value that is of the neighborhood radius of each of the M points and that is actually selected by the first data processing apparatus from the R candidate values. The target value may include a value of a neighborhood radius that is of the point and that is along one coordinate axis direction, that is, the target value may be one value; or the target value may include values of neighborhood radiuses that are of the point and that are along a plurality of coordinate axis directions, that is, the target value may include a plurality of values. The following describes a manner in which the first data processing apparatus determines the target value.

Manner 1: The first data processing apparatus may determine an average value of the R candidate values as the target value.

Manner 2: The first data processing apparatus may determine R parameters corresponding to the R candidate values, and determine a candidate value corresponding to a largest value in the R parameters as the target value. Each of the R parameters corresponds to one candidate value in the R candidate values. The parameter indicates a brightness difference corresponding to a candidate point selected from the N points, when a candidate value corresponding to the parameter is selected.

A process of determining, based on each of the R candidate values, a parameter corresponding to the candidate value is the same. The following uses a process of determining one candidate value in the R candidate values as an example for description.

S1.1: The first data processing apparatus obtains, through division from a target area by using the one candidate value as the neighborhood radius of each of the M points, a candidate neighborhood corresponding to each of the M points, where the candidate neighborhood corresponding to each of the M points may be referred to as a group of candidate neighborhoods.

S1.2: The first data processing apparatus may determine, from each candidate neighborhood in the group of candidate neighborhoods, candidate points corresponding to S largest brightness values. In this way, a group of candidate points corresponding to the group of candidate neighborhoods may be obtained. The group of candidate points include the candidate points that are in each candidate neighborhood in the group of candidate neighborhoods and that are corresponding to the S largest brightness values.

S1.3: The first data processing apparatus may determine a parameter of the group of candidate points based on brightness of the group of candidate points.

In a possible implementation, the parameter of the group of candidate points may be determined based on a difference between a sum of brightness of the group of candidate points and an average brightness value of candidate points included in the group of candidate points. In this case, the parameter of the group of candidate points may be considered as a contrast of the group of candidate points.

For example, a calculation formula for calculating the parameter of the group of candidate points is the following formula (1).

$$Y = E\left(\frac{I - E(I)}{E(I)}\right) \qquad (1)$$

Y represents the parameter of the group of candidate points, E() represents a mean function, and I represents the brightness of the group of candidate points.

In another possible implementation, the parameter of the group of candidate points is determined based on a brightness distribution probability of the candidate points included in the group of candidate points. In this case, the parameter of the group of candidate points may be determined based on an entropy of the group of candidate points. For example, the parameter of the group of candidate points is inversely correlated with the entropy of the group of candidate points. For example, the parameter of the group of candidate points is a reciprocal of the entropy of the group of candidate points, or the parameter of the group of candidate points is a negative number of the entropy of the group of candidate points.

For example, a calculation formula for calculating the entropy of the group of candidate points is the following formula (2).

$$W = - \int_a^b p(I) \log p(I) \, dI \qquad\qquad (2)$$

For a meaning of I, refer to the foregoing description. W represents the entropy of the group of candidate points, p() is the brightness distribution probability of the group of candidate points, p(I) represents a probability that a point whose brightness is I appears in the group of candidate points, and a and b respectively represent a smallest value and a largest value of the brightness of the group of candidate points.

By analogy, the first data processing apparatus may obtain, according to step S1.1, a group of candidate neighborhoods corresponding to each of the R candidate values, that is, may obtain R groups of candidate neighborhoods. Similarly, the first data processing apparatus may determine, according to step S1.2, a group of candidate points corresponding to each group of candidate neighborhoods in the R groups of candidate neighborhoods, that is, may obtain R groups of candidate points. In addition, the first data processing apparatus may determine, according to step S1.3, a parameter corresponding to each group of candidate points in the R groups of candidate points, that is, may obtain R parameters. The first data processing apparatus may determine a candidate value corresponding to a largest parameter in the R parameters as the target value.

In another possible implementation, the first data processing apparatus prestores a target value. For example, the target value is manually configured in the first data processing apparatus. In this case, the first data processing apparatus may not need to perform step S505, that is, S505 is an optional step, and is shown by using a dashed line in FIG. 5.

S506: The first data processing apparatus determines a neighborhood of each of the M points based on the target value.

For example, the first data processing apparatus obtains, through division from the target area by using, for example, one of the M points as a center, an area whose radius is the target value, to obtain a neighborhood of the one point. By analogy, neighborhoods of the M points may be obtained, that is, M neighborhoods may be obtained.

Optionally, if the target value includes values of neighborhood radiuses along a plurality of coordinate axis directions, the first data processing apparatus may correspondingly obtain the neighborhood of each of the M points, including neighborhoods that are of each point and that are along the plurality of coordinate axis directions.

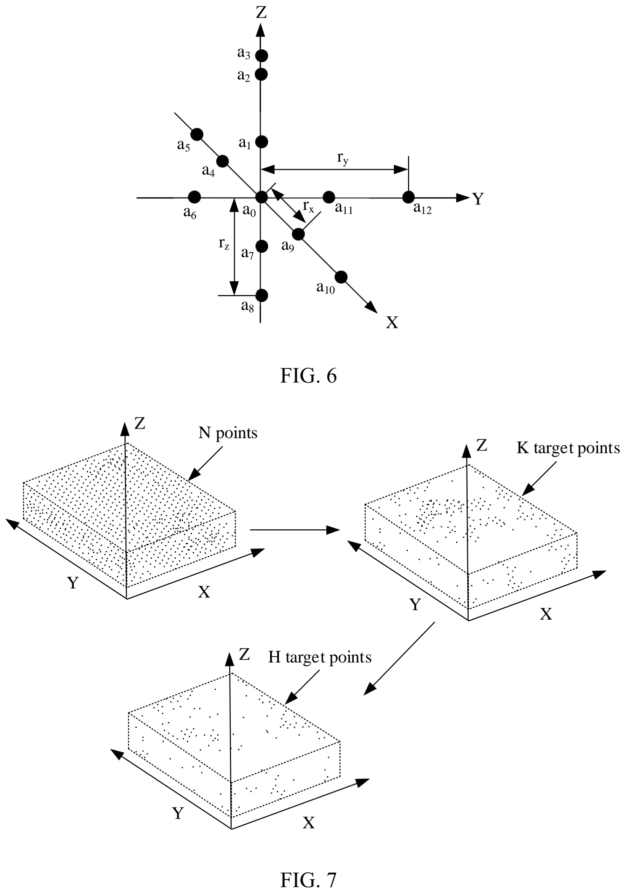

For example, FIG. 6 is a diagram of a neighborhood according to an embodiment of this application. In FIG. 6, an example in which the N points include 13 points that are $a_0$ to $a_{12}$, and neighborhood radiuses that are of $a_0$ and that are along the X-axis direction, the Y-axis direction, and the Z-axis direction are respectively $r_x$, $r_y$, and $r_z$ is used. Still refer to FIG. 6. A neighborhood that is of $a_0$ and that is along the X-axis direction includes $a_0$, $a_4$, and $a_9$, a neighborhood that is of $a_0$ and that is along the Y-axis direction includes $a_0$, $a_6$, $a_{11}$, and $a_{12}$, and a neighborhood that is of $a_0$ and that is along the Z-axis direction includes $a_0$, $a_1$, $a_2$, $a_7$, and $a_8$.

S507: The first data processing apparatus obtains K target points from the neighborhoods of the M points.

For example, the first data processing apparatus may determine, from the neighborhood of each of the M points, target points corresponding to S largest brightness values, to obtain the K target points. S and K are both positive integers less than N. This is equivalent to selecting some points with relatively high brightness from the neighborhood of each point, to ensure that the obtained K target points have relatively high brightness.

Optionally, a value of S may be 1. In this way, a quantity K is relatively small, and a data volume of filtered first point cloud data is reduced to a maximum extent. Especially when an object indicated by the first point cloud data presents a layered feature, redundant points in the point cloud data may be screened out to a maximum extent.

For example, still refer to FIG. 6. That the value of S is 1 is used as an example. The first data processing apparatus determines that a point with a largest brightness value in the neighborhood that is of $a_0$ and that is along the X-axis direction is $a_9$, a point with a largest brightness value in the neighborhood that is of $a_0$ and that is along the Y-axis direction is $a_{11}$, and a point with a largest brightness value in the neighborhood that is of $a_0$ and that is along Z-axis direction is $a_8$. Therefore, the first data processing apparatus may determine that target points in the neighborhoods corresponding to $a_0$ include $a_9$, $a_{11}$, and $a_8$.

S507 is equivalent to performing structured sparsity (or filtering) on the first point cloud data. In this way, some of the N points are screened out, thereby reducing a data volume of point cloud data transmitted by the first data processing apparatus to another apparatus (for example, the second data processing apparatus).

S508: The first data processing apparatus obtains second point cloud data based on brightness and coordinates of the K target points.

For example, the first data processing apparatus determines the brightness and the coordinates of the K target points from the first point cloud data, and uses the brightness and the coordinates of the K target points as the second point cloud data. If the first point cloud data further includes the color data of the N points, the second point cloud data may further include color data of the K target points.

Alternatively, the first data processing apparatus may further screen the K target points to obtain H target points, where H is a positive integer less than K; and determine brightness and coordinates of the H target points from the first point cloud data, and use the brightness and the coordinates of the H target points as the second point cloud data. If the first point cloud data further includes the color data of the N points, the second point cloud data may further include color data of the H target points.

The following describes a manner in which the first data processing apparatus determines the H target points.

For example, the first data processing apparatus may determine, from the K target points based on at least one brightness threshold, H target points that meet the at least one brightness threshold, for example, determine H target points that are less than the at least one brightness threshold or H points that are greater than the at least one brightness threshold.

A manner of determining the H target points based on the at least one brightness threshold may be indicated by using a policy. In other words, the first data processing apparatus may determine the H target points based on the policy and the at least one brightness threshold. If a quantity of the at least one threshold is different and the policy is different, content of the H target points obtained by the first data processing apparatus is different. The following separately describes the content.

Case 1: The quantity of the at least one brightness threshold is 1, that is, the at least one brightness threshold includes one brightness threshold, and the policy may indicate to retain a target point whose brightness is greater than or equal to the one brightness threshold.

In the case 1, the first data processing apparatus may use the target point whose brightness is greater than or equal to the one brightness threshold in the K target points as the H target points.

Case 2: The quantity of the at least one brightness threshold is 1, that is, the at least one brightness threshold includes one brightness threshold, and the policy may indicate to retain a target point whose brightness is less than or equal to the one brightness threshold.

In the case 2, the first data processing apparatus may use the target point whose brightness is less than or equal to the one brightness threshold in the K target points as the H target points.

Case 3: The quantity of the at least one brightness threshold is greater than 1, that is, the at least one brightness threshold includes a plurality of brightness thresholds, and the policy may indicate to retain a target point whose brightness is less than or equal to a smallest brightness threshold, and retain a target point whose brightness is greater than or equal to a largest brightness threshold. The smallest brightness threshold is a smallest value in the plurality of brightness thresholds, and the largest brightness threshold is a largest value in the plurality of brightness thresholds.

In the case 3, the first data processing apparatus may determine the target point whose brightness is less than or equal to the smallest brightness threshold and the target point whose brightness is greater than or equal to the largest brightness threshold in the K target points as the H target points.

For example, the plurality of brightness thresholds include two thresholds 110 and 120. In this case, the first data processing apparatus may determine a target point whose brightness is less than or equal to 110 and a target point whose brightness is greater than or equal to 120 in the K target points as the H target points.

Case 4: The quantity of the at least one brightness threshold is greater than 1, that is, the at least one brightness threshold includes a plurality of brightness thresholds, and the policy may indicate to retain a target point that is greater than or equal to a smallest brightness threshold and less than or equal to a largest brightness threshold.

In the case 4, the first data processing apparatus may determine the target point whose brightness is greater than or equal to the smallest brightness threshold and less than or equal to the largest brightness threshold in the K target points as the H target points.

For example, the plurality of brightness thresholds include two thresholds 20 and 120. In this case, the first data processing apparatus may determine a target point whose brightness is greater than or equal to 20 and less than or equal to 120 in the K target points as the H target points.

Case 5: The quantity of the at least one brightness threshold is greater than 1, that is, the at least one brightness threshold includes a plurality of brightness thresholds, and the policy may indicate to retain a target point whose brightness is between at least one group of brightness thresholds. Each group of brightness thresholds in the at least one group of brightness thresholds include two brightness thresholds, and no same brightness threshold exists in any two groups of thresholds in the at least one group of brightness thresholds.

In the case 5, the first data processing apparatus may determine the target point whose brightness is between the at least one group of brightness thresholds in the K target points as the H target points.

For example, the plurality of brightness thresholds include 50, 90, 160, and 200, and the first data processing apparatus may determine that there are two groups of thresholds, where one group of thresholds are 50 and 90, and the other group of thresholds are 160 and 200. The first data processing apparatus may determine a target point whose brightness is between 50 and 90 and a target point whose brightness is between 160 and 200 in the K target points as the H target points.

The foregoing case 1 to case 5 describe several examples of the brightness threshold quantity and the policy, and actually, specific content of the policy and the brightness threshold is not limited.

For example, FIG. 7 is a diagram of a process of processing point cloud data according to an embodiment of this application. In FIG. 7, an example in which the point cloud data represents point cloud data of a building is used. As shown in FIG. 7, after performing step S507 on N points shown in FIG. 7, the first data processing apparatus may obtain K target points shown in FIG. 7, and further screen the K target points, to obtain H target points shown in FIG. 7. As shown in FIG. 7, the first data processing apparatus may gradually reduce a quantity of points, but the reserved H target points still retain valid data of the object, and effectively retain structural information of the object.

S509: The first data processing apparatus sends the second point cloud data to the second data processing apparatus. Correspondingly, the second data processing apparatus receives the second point cloud data from the first data processing apparatus.

For example, the first data processing apparatus may further compress the second point cloud data, for example, perform source compression, and send the compressed second point cloud data to the second data processing apparatus. After obtaining the second point cloud data or the compressed second point cloud data, the second data processing apparatus may perform an operation such as object reconstruction and/or object identification. This is not limited in this embodiment of this application.

Certainly, the first data processing apparatus may not send the second point cloud data, that is, S509 is an optional step, and is shown by using a dashed line in FIG. 5.

In this embodiment of this application, the first data processing apparatus may determine the target points with the largest brightness values from the neighborhood of each of the M points. In this way, the quantity of points may be reduced, to reduce the data volume of the point cloud data, and a point with a more obvious characteristic may be retained, to retain valid data in the point cloud data, thereby improving effect of processing the point cloud data subsequently. In addition, the first data processing apparatus may further subsequently screen the target points based on the at least one threshold, and this may also reduce the data volume of the point cloud data. In this embodiment of this application, the method for retaining the largest brightness values in the neighborhood is applicable to screening point cloud data corresponding to any type of object. Especially for an object (for example, a building) having a layered feature, redundant data in the point cloud data may be screened out to a maximum extent in this manner, and data indicating an object structure can be effectively retained.

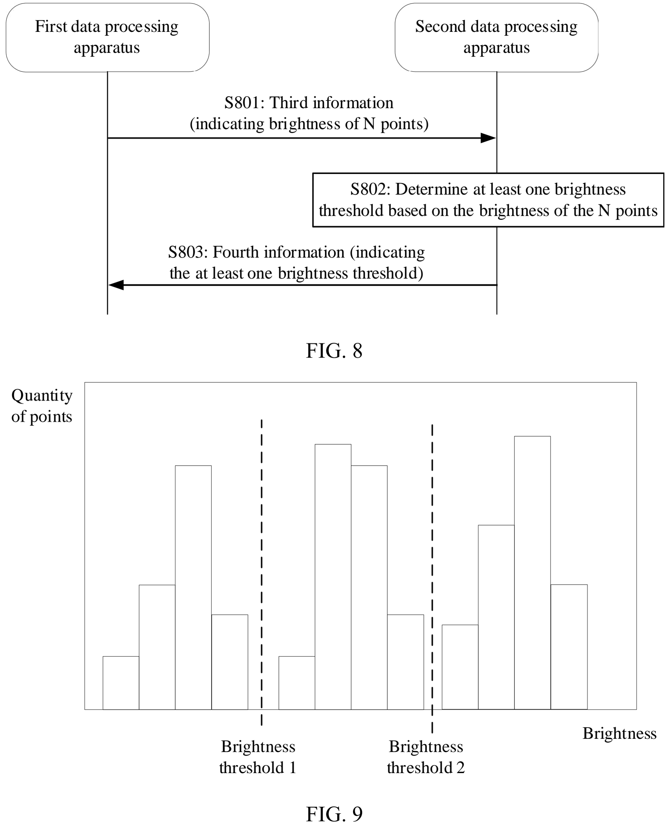

In a possible implementation, the at least one brightness threshold in S508 may be obtained by the first data processing apparatus from the second data processing apparatus. With reference to a diagram of a method for obtaining at least one brightness threshold shown in FIG. 8, the following describes a manner in which the first data processing apparatus obtains the at least one brightness threshold from the second data processing apparatus.

S801: The first data processing apparatus sends third information to the second data processing apparatus. Correspondingly, the second data processing apparatus receives the third information from the first data processing apparatus.

For example, the third information indicates brightness of the N points. For example, the third information may indicate a histogram of the brightness of the N points, and this is equivalent to indicating the brightness of the N points. The histogram collects statistics on brightness distribution of the N points. For example, an X-axis direction of the histogram may represent brightness of a point, or represent a ratio of brightness of a point to average brightness of the N points, and a Y-axis direction may represent a quantity of points whose brightness is a specific value in the N points.

S802: The second data processing apparatus determines at least one brightness threshold based on brightness of the N points.

The second data processing apparatus may determine a quantity of target object types as the quantity of the at least one brightness threshold.

If the quantity of the at least one brightness threshold is 1, that is, the at least one brightness threshold includes one brightness threshold, the first data processing apparatus may determine the one brightness threshold based on a maximum inter-class variance (Otsu) algorithm.

For example, the second data processing apparatus may determine a plurality of candidate brightness thresholds, determine an inter-class variance corresponding to each of the plurality of candidate brightness thresholds, and determine a candidate brightness threshold with a largest inter-class variance as the one brightness threshold. An inter-class variance corresponding to one candidate brightness threshold may be obtained by performing a weighted summation on a variance of brightness less than the one candidate brightness threshold in the brightness of the N points and a variance of brightness greater than the one candidate brightness threshold in the brightness of the N points.

If the quantity of the at least one brightness threshold is greater than 1, that is, the at least one brightness threshold includes a plurality of brightness thresholds, the second data processing apparatus may determine the plurality of brightness thresholds based on a multiple-maximum inter-class variance (multiple-Otsu, Multi-Otsu) algorithm.

For example, the second data processing apparatus may determine a plurality of candidate brightness thresholds, determine an inter-class variance corresponding to each of the plurality of candidate brightness thresholds, and determine F candidate brightness thresholds with largest inter-class variances as the plurality of brightness thresholds.

That is, a value of F is a quantity of the plurality of brightness thresholds, and F is an integer greater than 1. For a manner of determining the inter-class variance, refer to the foregoing description.

For example, FIG. 9 is a diagram of a histogram according to an embodiment of this application. Based on the histogram, the second data processing apparatus may determine two brightness thresholds, which are specifically a brightness threshold 1 and a brightness threshold 2 shown in FIG. 9. It may be learned from FIG. 9 that the two brightness thresholds are equivalent to dividing the histogram into three parts.

Optionally, the second data processing apparatus may further determine a policy. For example, the second data processing apparatus may be preconfigured with the policy. For example, the second data processing apparatus is manually configured with the policy, or determines the policy based on a target object type. This is not limited in this embodiment of this application.

In FIG. 8, an example in which the second data processing apparatus determines the at least one brightness threshold is used for description. However, in another possible implementation, the at least one brightness threshold may alternatively be determined by the first data processing apparatus. For a manner in which the first data processing apparatus determines the at least one brightness threshold, refer to the foregoing content in which the second data processing apparatus determines the at least one brightness threshold. Details are not described herein again. The policy may alternatively be preconfigured in the first data processing apparatus. Alternatively, the at least one brightness threshold may be determined by the first data processing apparatus, and the policy may be obtained from the second data processing apparatus.

S803: The second data processing apparatus sends fourth information to the first data processing apparatus. Correspondingly, the first data processing apparatus receives the fourth information from the second data processing apparatus. The fourth information indicates the at least one brightness threshold.

Optionally, the fourth information further indicates the policy. For a meaning of the policy, refer to the foregoing content.

In this way, the first data processing apparatus may determine the H target points from the K target points based on the at least one brightness threshold. Alternatively, if the fourth information further indicates the policy, the first data processing apparatus may determine the H target points based on the at least one brightness threshold and the policy.

In this embodiment of this application, the first data processing apparatus may obtain the at least one threshold from the second data processing apparatus, and the first data processing apparatus does not need to determine the at least one threshold, thereby reducing processing load of the first data processing apparatus. In addition, the second data processing apparatus may further determine the at least one threshold with reference to a requirement for processing the point cloud data (for example, the quantity of target object types, namely, a first quantity), so that the at least one second threshold better meets the requirement.

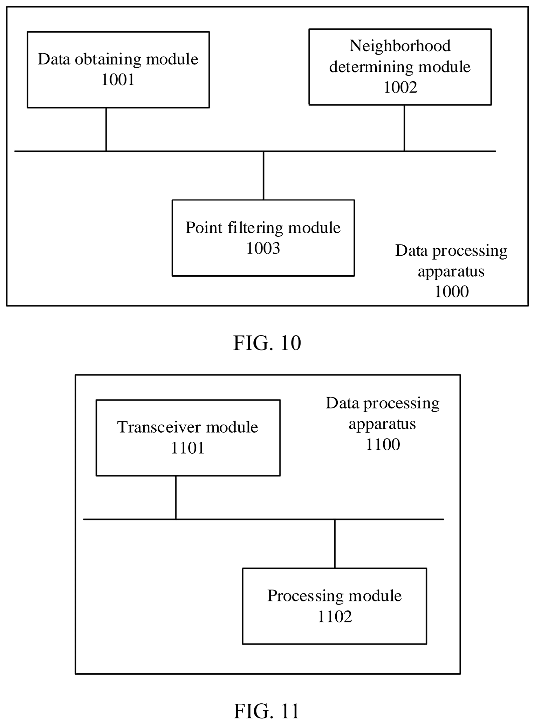

An embodiment of this application provides a data processing apparatus. FIG. 10 is a diagram of a structure of a data processing apparatus according to an embodiment of this application. As shown in FIG. 10, a data processing apparatus 1000 includes a data obtaining module 1001, a neighborhood determining module 1002, and a point filtering module 1003.

The data obtaining module 1001, the neighborhood determining module 1002, and the point filtering module 1003 may all be implemented by using software, or may be implemented by using hardware. For example, the following uses the neighborhood determining module 1002 as an example to describe an implementation of the neighborhood determining module 1002. Similarly, implementations of the data obtaining module 1001 and the point filtering module 1003 may be the implementation of the neighborhood determining module 1002.

In an example in which a module is a software functional unit, the neighborhood determining module 1002 may include code that is run on a computing instance. The computing instance may include at least one of a physical host (a computing device), a virtual machine, and a container. Further, there may be one or more computing instances. For example, the neighborhood determining module 1002 may include code that is run on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is arranged in one region. For communication between two VPCs in a same region and cross-region communication between VPCs in different regions, a communication gateway needs to be arranged in each of the VPCs, and interconnection between the VPCs is implemented through the communication gateway.

In an example in which a module is a hardware functional unit, the neighborhood determining module 1002 may include at least one computing device, such as a server. Alternatively, the neighborhood determining module 1002 may be a device implemented by using an application-specific integrated circuit (application-specific integrated circuit, ASIC) or a programmable logic device (programmable logic device, PLD), or the like. The PLD may be a complex program logic device (complex programmable logic device, CPLD), a field-programmable gate array (field-programmable gate array, FPGA), a generic array logic (generic array logic, GAL), or any combination thereof.

A plurality of computing devices included in the neighborhood determining module 1002 may be distributed in a same region, or may be distributed in different regions. The plurality of computing devices included in the neighborhood determining module 1002 may be distributed in a same AZ, or may be distributed in different AZs. Similarly, the plurality of computing devices included in the neighborhood determining module 1002 may be distributed in a same VPC, or may be distributed in a plurality of VPCs. The plurality of computing devices may be any combination of computing devices such as a server, an ASIC, a PLD, a CPLD, an FPGA, and a GAL.

The data processing apparatus 1000 may be configured to implement a function of the foregoing first data processing apparatus, and correspondingly, may also perform the steps performed by the foregoing first data processing apparatus.

For example, the data obtaining module 1001 may be configured to perform step S501, and the neighborhood determining module 1002 may be configured to perform step S506. For example, the point filtering module 1003 may be configured to perform steps S507 and S508. Optionally, the point filtering module 1003 may further perform step S509. Optionally, the neighborhood determining module 1002 may further perform steps S502 to S504. Optionally, the neighborhood determining module 1002 may further perform steps S801 to S803.

An embodiment of this application provides a data processing apparatus. FIG. 11 is a diagram of a structure of a data processing apparatus according to an embodiment of this application. As shown in FIG. 11, a data processing apparatus 1100 includes a transceiver module 1101 and a processing module 1102.

For implementations of the transceiver module 1101 and the processing module 1102, refer to the implementation of the foregoing neighborhood determining module 1002. Details are not described herein again.

The data processing apparatus 1100 may be configured to implement a function of the foregoing second data processing apparatus, and correspondingly, may also perform the steps performed by the foregoing second data processing apparatus.

For example, the transceiver module 1101 may be configured to perform steps S502, S504, and S509. The processing module 1102 may be further configured to perform step S503. In addition, the transceiver module 1101 may be further configured to perform steps S801 and S803, and the processing module 1102 may be further configured to perform step S802.

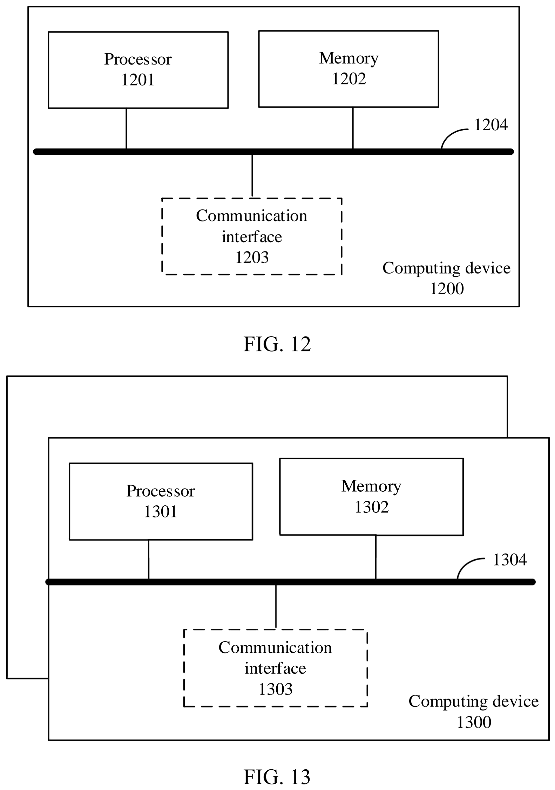

An embodiment of this application provides a data processing apparatus. FIG. 12 is a diagram of a structure of a computing device 1200 according to an embodiment of this application. As shown in FIG. 12, the computing device 1200 includes a processor 1201 and a memory 1202. The processor 1201 and the memory 1202 may be coupled or integrated, or the processor 1201 and the memory 1202 may be relatively independently disposed. Optionally, the computing device 1200 further includes a communication interface 1203. The communication interface 1203 uses a transceiver module, for example, but not limited to, a network interface card or a transceiver, to implement communication between the computing device 1200 and another device or a communication network.

The processor 1201, the memory 1202, and the communication interface 1203 may communicate with each other through a bus 1204. The computing device 1200 may be a server or a terminal device. It should be understood that quantities of processors and memories in the computing device 1200 are not limited in this embodiment of this application.

The bus 1204 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is represented by using only one line in FIG. 12. However, this does not indicate that there is only one bus or only one type of bus. The bus 1204 may include a path for transmitting information between components (for example, the processor 1201, the memory 1202, and the communication interface 1203) of the computing device 1200.

The processor 1201 may include any one or more of processors, such as a central processing unit (central processing unit, CPU), a graphics processing unit (graphics processing unit, GPU), a microprocessor (microprocessor, MP), or a digital signal processor (digital signal processor, DSP).

The memory 1202 may include a volatile memory (volatile memory), for example, a random access memory (random access memory, RAM). The memory 1202 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 1202 stores executable program code, and the processor 1201 executes the executable program code to implement a function of the foregoing first data processing apparatus or the data processing apparatus 1000 shown in FIG. 10, to implement the steps performed by the foregoing first data processing apparatus. Alternatively, the processor 1201 executes the executable program code to implement a function of the foregoing second data processing apparatus or the data processing apparatus 1100 shown in FIG. 11, to implement the steps performed by the foregoing second data processing apparatus. In other words, the memory 1202 stores instructions used to perform any one of the foregoing data processing methods.

Alternatively, the memory 1202 stores executable code, and the processor 1201 executes the executable code to implement a function of the foregoing first data processing apparatus (the data processing apparatus 1000 shown in FIG. 10), to implement the steps performed by the foregoing first data processing apparatus. Alternatively, the processor 1201 executes the executable program code to implement a function of the foregoing second data processing apparatus (the data processing apparatus 1100 shown in FIG. 11), to implement the steps performed by the foregoing second data processing apparatus. In other words, the memory 1202 stores instructions used to perform any one of the data processing methods.

An embodiment of this application further provides a computing device cluster. The computing device cluster includes at least one computing device. Each of the at least one computing device may be a server, for example, a central server, an edge server, or a local server in a local data center. In some embodiments, the computing device may alternatively be a terminal device, for example, a desktop computer, a notebook computer, or a smartphone.

FIG. 13 is a diagram of a structure of a computing device cluster according to an embodiment of this application. As shown in FIG. 13, the computing device cluster includes at least one computing device 1300. Each computing device 1300 in the computing device cluster may include a processor 1301 and a memory 1302. Optionally, each computing device 1300 in the computing device cluster further includes a communication interface 1303. The processor 1301, the memory 1302, and the communication interface 1303 may be connected through a bus 1304. For an implementation of the processor 1301, refer to the implementation of the foregoing processor 1201 in FIG. 12. For an implementation of the memory 1302, refer to the implementation of the foregoing memory 1202 in FIG. 12. For an implementation of the communication interface 1303, refer to the implementation of the foregoing communication interface 1203 in FIG. 12. For an implementation of the bus 1304, refer to the implementation of the foregoing bus 1204 in FIG. 12.

In a possible implementation, the memory 1302 in each computing device 1300 in the computing device cluster may store same instructions used to perform any one of the foregoing data processing methods.

In another possible implementation, the memory 1302 in the at least one computing device 1300 in the computing device cluster may alternatively separately store some instructions used to perform any one of the foregoing data processing methods. In other words, a combination of the at least one computing device 1300 may jointly execute instructions used to perform any one of the foregoing data processing methods.

Optionally, the memories 1302 in different computing devices 1300 in the computing device cluster may store different instructions that are separately used to execute some functions of the data processing apparatus 1100. In other words, the instructions stored in the memories 1302 in different computing devices 1300 may be used to implement functions of the first data processing apparatus and/or the second data processing apparatus.

In some possible implementations, the at least one computing device 1300 in the computing device cluster may be connected through a network. The network may be a wide area network, a local area network, or the like. Specifically, the at least one computing device 1300 is connected to the network through the communication interface 1303 in each computing device 1300. In such a possible implementation, the at least one computing device 1300 in the computing device cluster may jointly perform any one of the foregoing data processing methods, for example, the data processing method shown in FIG. 5.

An embodiment of this application provides a data processing system. The data processing system includes any one of the foregoing first data processing apparatuses and any one of the foregoing second data processing apparatuses. The first data processing apparatus and the second data processing apparatus may collaboratively implement any one of the foregoing data processing methods, for example, the data processing method shown in FIG. 5. The first data processing apparatus is, for example, the data processing apparatus 1000 shown in FIG. 10, and the second data processing apparatus is, for example, the data processing apparatus 1100 shown in FIG. 11.

An embodiment of this application provides a chip system. The chip system includes a processor and an interface. The processor is configured to invoke instructions from the interface and run the instructions. When the processor executes the instructions, any one of the foregoing data processing methods, for example, the data processing method shown in FIG. 5, is implemented.

An embodiment of this application provides a computer-readable storage medium. The computer-readable storage medium is configured to store a computer program or instructions. When the computer program or instructions are run, any one of the foregoing data processing methods, for example, the data processing method shown in FIG. 5, is implemented. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like.

An embodiment of this application provides a computer program product including instructions. When the instructions are run on a computer, any one of the foregoing data processing methods, for example, the data processing method shown in FIG. 5, is implemented. The computer program product may be software or a program product that includes instructions and that can be run on a computing device or stored in any usable medium.

The method steps in embodiments of this application may be implemented by hardware, or may be implemented by a processor executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may exist in a base station or a terminal as discrete components.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A point cloud data processing method, applied to a first data processing apparatus, wherein the method comprises:

   obtaining first point cloud data, wherein the first point cloud data comprises brightness and coordinates of N points, and N is an integer greater than 1;
   determining a neighborhood of each of M points, wherein the neighborhood of each point comprises at least one of the N points, the at least one point is distributed by using each point as a center, the M points belong to the N points, and M is a positive integer less than or equal to N;
   determining, from the neighborhood of each of the M points, target points corresponding to S largest brightness values, to obtain a total of K target points, wherein K is a positive integer less than N, and S is a positive integer; and
   determining second point cloud data based on brightness and coordinates of the K target points.

2. The method according to claim 1, wherein determining the neighborhood of each of the M points comprises:
   obtaining, through division from a target area by using each point as a center, an area whose radius is a target value, and determining the area obtained through division as the neighborhood of each point, wherein the target area is an area comprising the N points.

3. The method according to claim 2, wherein the method further comprises:

   obtaining R candidate values of a neighborhood radius of each point, wherein R is an integer greater than 1;
   obtaining R groups of candidate neighborhoods, wherein each group of candidate neighborhoods in the R groups of candidate neighborhoods comprise M candidate neighborhoods determined based on one candidate value in the R candidate values and the M points, and R is an integer greater than 1;

obtaining R groups of candidate points, wherein each group of candidate points in the R groups of candidate points comprise candidate points that are determined from each candidate neighborhood in each group of candidate neighborhoods and that are corresponding to S largest brightness values; and

determining a parameter of each group of candidate points in the R groups of candidate points, wherein the target value is a candidate value corresponding to a group of candidate points with a largest value of the parameter, and the parameter of each group of candidate points indicates a brightness difference between candidate points comprised in each group of candidate points.

4.   The method according to claim 3, wherein determining the parameter of each group of candidate points in the R groups of candidate points comprises:

determining a difference between a sum of brightness of the candidate points comprised in each group of candidate points and an average brightness value of the candidate points comprised in each group of candidate points, and determining the parameter based on the difference; or

determining the parameter based on a brightness distribution probability of the candidate points comprised in each group of candidate points.

5.   The method according to claim 3 or 4, wherein obtaining the R candidate values of the neighborhood radius of each point comprises:

receiving first information from a second data processing apparatus, wherein the first information indicates the R candidate values.

6.   The method according to claim 5, wherein the method further comprises:

sending second information to the second data processing apparatus, wherein the second information indicates a density for sampling the first point cloud data, and the density is used to determine a candidate value of the neighborhood radius of each point.

7.   The method according to any one of claims 1 to 6, wherein the neighborhood of each of the M points comprises neighborhoods that are of each point and that are along a plurality of coordinate axis directions; and determining, from the neighborhood of each of the M points, the target points corresponding to the S largest brightness values comprises:

determining, from a neighborhood that is of each point and that is along at least one of the plurality of coordinate axis directions, target points corresponding to S largest brightness values.

8.   The method according to any one of claims 1 to 7, wherein determining the brightness and the coordinates of the K target points from the first point cloud data, to obtain the second point cloud data comprises:

determining H target points from the K target points based on at least one brightness threshold, wherein H is a positive integer less than K; and

determining brightness and coordinates of the H target points from the first point cloud data, to obtain the second point cloud data.

9.   The method according to claim 8, wherein the method further comprises:

sending third information to the second data processing apparatus, wherein the third information indicates the brightness of the N points, and the brightness of the N points is used to determine the at least one brightness threshold; and

receiving fourth information from the second data processing apparatus, wherein the fourth information indicates the at least one brightness threshold.

10.   The method according to claim 8, wherein the method further comprises:

determining the at least one brightness threshold based on the brightness of the N points; or

determining the at least one brightness threshold based on the brightness of the N points and a first quantity, wherein the first quantity is a quantity of object types that are expected to be identified based on the first point cloud data, and a quantity of the at least one brightness threshold is the first quantity.

11.   A point cloud data processing method, applied to a second data processing apparatus, wherein the method comprises:

sending first information to a first data processing apparatus, wherein the first information indicates R candidate values of neighborhood radiuses of M points, the M points belong to N points corresponding to first point cloud data, the first point cloud data comprises brightness and coordinates of the N points, N is an integer greater than 1, and M is a positive integer less than or equal to N; and

receiving second point cloud data from the first data processing apparatus, wherein the second point cloud data is determined based on intensity and coordinates of K target points, the K target points comprise target points that are determined from a neighborhood of each of the M points and that are corresponding to S largest brightness values, a neighborhood radius of each of the M points is a target value, and the target value is one candidate value in the R candidate values.

12. The method according to claim 11, wherein before sending the first information to the first data processing apparatus, the method further comprises:

receiving second information from the first data processing apparatus, wherein the second information indicates a density for sampling the first point cloud data, and the density is used to determine a candidate value of the neighborhood radius of each point.

13. The method according to claim 11 or 12, wherein the method further comprises:

receiving third information from the first data processing apparatus, wherein the third information indicates the brightness of the N points;

determining at least one brightness threshold based on the brightness of the N points or based on the brightness of the N points and a first quantity, wherein the first quantity is a quantity of object types that are expected to be identified based on the first point cloud data, and a quantity of the at least one brightness threshold is the first quantity; and

sending fourth information to the first data processing apparatus, wherein the fourth information indicates the at least one threshold, the at least one brightness threshold is used to determine H target points from the K target points, H is a positive integer less than K, and the second point cloud data comprises brightness and coordinates of the H target points.

14. A data processing apparatus, comprising:

a data obtaining module, configured to obtain first point cloud data, wherein the first point cloud data comprises brightness and coordinates of N points, and N is an integer greater than 1;

a neighborhood determining module, configured to determine a neighborhood of each of M points, wherein the neighborhood of each point comprises at least one of the N points, the at least one point is distributed by using each point as a center, the M points belong to the N points, and M is a positive integer less than or equal to N; and

a point filtering module, configured to: determine, from the neighborhood of each of the M points, target points corresponding to S largest brightness values, to obtain a total of K target points, wherein K is a positive integer less than N, and S is a positive integer; and determine second point cloud data based on brightness and coordinates of the K target points.

15. The apparatus according to claim 14, wherein the neighborhood determining module is specifically configured to:

obtain, through division from a target area by using each point as a center, an area whose radius is a target value, and determine the area obtained through division as the neighborhood of each point, wherein the target area is an area comprising the N points.

16. The apparatus according to claim 15, wherein the neighborhood determining module is further configured to:

obtain R candidate values of a neighborhood radius of each point, wherein R is an integer greater than 1;

obtain R groups of candidate neighborhoods, wherein each group of candidate neighborhoods in the R groups of candidate neighborhoods comprise M candidate neighborhoods determined based on one candidate value in the R candidate values and the M points, and R is an integer greater than 1;

obtain R groups of candidate points, wherein each group of candidate points in the R groups of candidate points comprise candidate points that are determined from each candidate neighborhood in each group of candidate neighborhoods and that are corresponding to S largest brightness values; and

determine a parameter of each group of candidate points in the R groups of candidate points, wherein the target value is a candidate value corresponding to a group of candidate points with a largest value of the parameter, and the parameter of each group of candidate points indicates a brightness difference between candidate points comprised in each group of candidate points.

17. The apparatus according to claim 16, wherein the neighborhood determining module is further configured to:

    determine a difference between a sum of brightness of the candidate points comprised in each group of candidate points and an average brightness value of the candidate points comprised in each group of candidate points, and determine the parameter based on the difference; or
    determine the parameter based on a brightness distribution probability of the candidate points comprised in each group of candidate points.

18. The apparatus according to claim 16 or 17, wherein the neighborhood determining module is specifically configured to:
    receive first information from a second data processing apparatus, wherein the first information indicates the R candidate values.

19. The apparatus according to claim 18, wherein the point filtering module is further configured to:
    send second information by the second data processing apparatus, wherein the second information indicates a density for sampling the first point cloud data, and the density is used to determine a candidate value of the neighborhood radius of each point.

20. The apparatus according to any one of claims 14 to 19, wherein the neighborhood of each of the M points comprises neighborhoods that are of each point and that are along a plurality of coordinate axis directions; and the point filtering module is specifically configured to:
    determine, from a neighborhood that is of each point and that is along at least one of the plurality of coordinate axis directions, target points corresponding to S largest brightness values.

21. The apparatus according to any one of claims 14 to 20, wherein the point filtering module is specifically configured to:

    determine H target points from the K target points based on at least one brightness threshold, wherein H is a positive integer less than K; and
    determine brightness and coordinates of the H target points from the first point cloud data, to obtain the second point cloud data.

22. The apparatus according to claim 21, wherein the point filtering module is further configured to:

    send third information to the second data processing apparatus, wherein the third information indicates the brightness of the N points, and the brightness of the N points is used to determine the at least one brightness threshold; and
    receive fourth information from the second data processing apparatus, wherein the fourth information indicates the at least one brightness threshold.

23. A data processing apparatus, comprising a transceiver module and a processing module, wherein
    the transceiver module is configured to: under control of the processing module, send first information to a first data processing apparatus, wherein the first information indicates R candidate values of neighborhood radiuses of M points, the M points belong to N points corresponding to first point cloud data, the first point cloud data comprises brightness and coordinates of the N points, N is an integer greater than 1, and M is a positive integer less than or equal to N; and receive second point cloud data from the first data processing apparatus, wherein the second point cloud data is determined based on intensity and coordinates of K target points, the K target points comprise target points that are determined from a neighborhood of each of the M points and that are corresponding to S largest brightness values, a neighborhood radius of each of the M points is a target value, and the target value is one candidate value in the R candidate values.

24. The apparatus according to claim 23, wherein the transceiver module is further configured to:
    before sending the first information to the first data processing apparatus, receive second information from the first data processing apparatus, wherein the second information indicates a density for sampling the first point cloud data, and the density is used to determine a candidate value of the neighborhood radius of each point.

**25.** The apparatus according to claim 23 or 24, wherein

the transceiver module is further configured to receive third information from the first data processing apparatus, wherein the third information indicates the brightness of the N points;

the processing module is further configured to determine at least one brightness threshold based on the brightness of the N points or based on the brightness of the N points and a first quantity, wherein the first quantity is a quantity of object types that are expected to be identified based on the first point cloud data, and a quantity of the at least one brightness threshold is the first quantity; and

the transceiver module is further configured to send fourth information to the first data processing apparatus, wherein the fourth information indicates the at least one threshold, the at least one brightness threshold is used to determine H target points from the K target points, H is a positive integer less than K, and the second point cloud data comprises brightness and coordinates of the H target points.

**26.** A data processing system, comprising the apparatus according to any one of claims 14 to 22 and the apparatus according to any one of claims 23 to 25.

**27.** A computing device, comprising a processor and a memory, wherein the memory is configured to store one or more computer programs, the one or more computer programs comprise computer instructions, and when the processor executes the computer instructions, the method according to any one of claims 1 to 13 is performed.

**28.** A chip system, wherein the chip system comprises a processor and an interface, the processor is configured to invoke instructions from the interface and run the instructions, and when the processor executes the instructions, the method according to any one of claims 1 to 13 is implemented.

**29.** A computing device cluster, comprising at least one computing device, wherein each computing device comprises a processor and a memory; and

the processor of the at least one computing device is configured to execute instructions stored in the memory of the at least one computing device, so that the computing device cluster performs the method according to any one of claims 1 to 13.

**30.** A computer program product comprising instructions, wherein when the instructions are run by a computer, the method according to any one of claims 1 to 13 is performed.

**31.** A computer-readable storage medium, wherein the storage medium stores a computer program or instructions, and when the computer program or instructions are run by a processor, the method according to any one of claims 1 to 13 is performed.

FIG. 1

FIG. 2

Point cloud data

Filtered point cloud data

FIG. 3

Building

Second data processing apparatus (for example, a core network element)

Terminal device

First data processing apparatus (for example, an access network element)

FIG. 4

```
┌─────────────────────┐              ┌─────────────────────┐
│  First data processing │              │ Second data processing │
│       apparatus        │              │       apparatus        │
└───────────┬───────────┘              └───────────┬───────────┘
            │                                      │
┌───────────┴───────────┐                          │
│  S501: Obtain first point cloud data             │
│  (including brightness and coordinates of        │
│               N points)               │          │
└───────────┬───────────┘                          │
            │                                      │
            │  S502: Second information (indicating a density
            │     for sampling the first point cloud data)
            │ - - - - - - - - - - - - - - - - - - ▶│
            │                                      │
            │        ┌ ─ ─ ─ ─ ─ ─ ─ ─ ─ ─ ─ ─ ─ ─ ┴ ─ ─ ─ ─ ┐
            │        │  S503: Determine a target value range   │
            │        │       (including R candidate values)    │
            │        └ ─ ─ ─ ─ ─ ─ ─ ─ ─ ─ ─ ─ ─ ─ ┬ ─ ─ ─ ─ ┘
            │                                      │
            │        S504: First information        │
            │◀ - - - (indicating the target value range) - - - │
            │                                      │
┌ ─ ─ ─ ─ ─ ┴ ─ ─ ─ ─ ─ ─ ─ ┐                      │
│  S505: Determine a target value from the         │
│           R candidate values           │         │
└ ─ ─ ─ ─ ─ ┬ ─ ─ ─ ─ ─ ─ ─ ┘                      │
┌───────────┴───────────┐                          │
│  S506: Determine a neighborhood of each          │
│     of M points based on the target value        │
└───────────┬───────────┘                          │
┌───────────┴───────────┐                          │
│  S507: Obtain K target points from the           │
│      neighborhoods of the M points               │
└───────────┬───────────┘                          │
┌───────────┴───────────┐                          │
│  S508: Obtain second point cloud data            │
│  based on brightness and coordinates of          │
│            the K target points          │        │
└───────────┬───────────┘                          │
            │      S509: Second point cloud data    │
            │ - - - - - - - - - - - - - - - - - - ▶│
            │                                      │
```

FIG. 5

FIG. 6

FIG. 7

First data processing
apparatus

Second data processing
apparatus

S801: Third information
(indicating brightness of N points)

S802: Determine at least one brightness
threshold based on the brightness of the N points

S803: Fourth information (indicating
the at least one brightness threshold)

FIG. 8

Quantity
of points

Brightness
threshold 1

Brightness
threshold 2

Brightness

FIG. 9

Data obtaining module
1001

Neighborhood
determining module
1002

Point filtering module
1003

Data processing
apparatus
1000

FIG. 10

Transceiver module
1101

Data processing
apparatus
1100

Processing module
1102

FIG. 11

FIG. 12

FIG. 13

**EP 4 654 148 A1**

## INTERNATIONAL SEARCH REPORT

| International application No. |
|---|
| **PCT/CN2024/076850** |

| A. | CLASSIFICATION OF SUBJECT MATTER |
|---|---|

G06T 17/00(2006.01)i

According to International Patent Classification (IPC) or to both national classification and IPC

| B. | FIELDS SEARCHED |
|---|---|

Minimum documentation searched (classification system followed by classification symbols)

IPC: G06T.G06F

Documentation searched other than minimum documentation to the extent that such documents are included in the fields searched

Electronic data base consulted during the international search (name of data base and, where practicable, search terms used)

CNABS, CNTXT, CNKI, BAIDU, VEN, WOTXT, EPTXT, USTXT, IEEE: 点云, 亮度, 邻域, 压缩, 剪裁, 候选, 半径, 密度, 阈值, point cloud, brightness, neighborhood, compression, clipping, candidate, radius, density, threshold

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 114693696 A (HUAWEI TECHNOLOGIES CO., LTD.) 01 July 2022 (2022-07-01) description, paragraphs 4-32 | 1-31 |
| A | CN 111144211 A (HUAWEI TECHNOLOGIES CO., LTD.) 12 May 2020 (2020-05-12) entire document | 1-31 |
| A | CN 111866518 A (XI'AN UNIVERSITY OF POSTS & TELECOMMUNICATIONS) 30 October 2020 (2020-10-30) entire document | 1-31 |
| A | US 2020204782 A1 (SAMSUNG ELECTRONICS CO., LTD.) 25 June 2020 (2020-06-25) entire document | 1-31 |
| A | US 2022292728 A1 (SHENZHEN UNIVERSITY) 15 September 2022 (2022-09-15) entire document | 1-31 |

☐ Further documents are listed in the continuation of Box C.      ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 April 2024** | **25 April 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

31

**INTERNATIONAL SEARCH REPORT**
Information on patent family members

International application No.

**PCT/CN2024/076850**

| Patent document cited in search report | | | Publication date (day/month/year) | Patent family member(s) | | | Publication date (day/month/year) |
|---|---|---|---|---|---|---|---|
| CN | 114693696 | A | 01 July 2022 | WO | 2022142628 | A1 | 07 July 2022 |
| CN | 111144211 | A | 12 May 2020 | WO | 2021036578 | A1 | 04 March 2021 |
| | | | | EP | 3998548 | A1 | 18 May 2022 |
| | | | | US | 2021304499 | A1 | 30 September 2021 |
| CN | 111866518 | A | 30 October 2020 | | None | | |
| US | 2020204782 | A1 | 25 June 2020 | WO | 2020130750 | A1 | 25 June 2020 |
| | | | | EP | 3899873 | A1 | 27 October 2021 |
| | | | | KR | 20210095224 | A | 30 July 2021 |
| US | 2022292728 | A1 | 15 September 2022 | CN | 112990010 | A | 18 June 2021 |
| | | | | WO | 2022193335 | A1 | 22 September 2022 |

Form PCT/ISA/210 (patent family annex) (July 2022)

**EP 4 654 148 A1**

**Patent documents cited in the description**

- CN 202310153062